# EUROPÄISCHE PATENTANMELDUNG

(11) **EP 3 699 240 A1**
(43) Veröffentlichungstag der Anmeldung: **26.08.2020**
(21) Anmeldenummer: 19158319.4
(22) Anmeldetag: 20.02.2019
(51) Int. Cl.: C09D 5/00

(54) **VERWENDUNG SPEZIELLER THIOLVERBINDUNGEN ZUR VERBESSERUNG DER LAGERSTABILITÄT VON ZUSAMMENSETZUNGEN AUF BASIS VON AMINVERBINDUNGEN ENTHALTENDEN EPOXIDHARZEN**

(71) Anmelder: Hilti Aktiengesellschaft, 9494 Schaan (LI)
(72) Erfinder: Jochmann, Phillip, 89073 Ulm (DE); Marauska, Juliane, 86199 Augsburg (DE); Lang, Martin, 82152 Planegg (DE); Schlenk, Stefan, 86899 Landsberg (DE); Student, Katja, 86152 Augsburg (DE)
(74) Vertreter: Hilti Aktiengesellschaft Corporate Intellectual Property

(57) **Zusammenfassung**

Es wird eine dämmschichtbildende Zusammensetzung beschrieben, die ein Bindemittel auf Epoxid-Thiol-Basis enthält. Durch die erfindungsgemäße Zusammensetzung, deren Expansionsrate relativ hoch ist, können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine große isolierende Wirkung erreicht werden kann. Die erfindungsgemäße Zusammensetzung eignet sich besonders für den Brandschutz, insbesondere als Beschichtung von metallischen und nicht metallischen Substraten, etwa Stahlbauteilen, wie Stützen, Trägern, Fachwerkstäben, zur Erhöhung der Feuerwiderstandsdauer.

## Beschreibung

Die vorliegende Erfindung betrifft die Verwendung von bestimmten Thiolverbindungen, insbesondere von Thiolverbindungen, die frei von elektrophilen Gruppen sind, zur Verbesserung der Lagerstabilität von Zusammensetzungen auf der Basis von Aminverbindungen enthaltenden Epoxidharzen. Insbesondere betrifft die vorliegende Erfindung die Verwendung von Thiolverbindungen, die frei von Estergruppen sind, zur Verbesserung der Lagerstabilität von dämmschichtbildenden Zusammensetzungen auf der Basis von Aminverbindungen enthaltenden Epoxidharzen, die ein oder mehrere dämmschichtbildende Additive enthalten.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls erheblich, d.h. der Stahl verliert seine Stabilität und seine Tragfähigkeit. Eine für die Tragfähigkeit der Konstruktion kritische Temperatur kann je nach Brandbelastung, etwa bei direkter Feuereinwirkung (ca. 1000°C) bereits nach ca. 5-10 Minuten erreicht werden. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

Hierzu existieren im Stand der Technik verschiedene Systeme.

Im Bereich der Beschichtungen ist aus der DE 4141858 A1 bekannt, Bisphenol-A-diglycidylether, die mit Dimercaptoverbindungen oder Mercapto-Carbonsäuren und Bisphenol A verlängert sind, als Bindemittel, das mit Aminen gehärtet wird, einzusetzen.

Die WO 2012/082224 A1 beispielsweise beschreibt eine Zusammensetzung, die ein Epoxidharz, mindestens eine Polythiolverbindung als Härtungsmittel und mindestens einen Katalysator umfasst. Eine ähnliche Zusammensetzung, die ein Epoxidharz und ein Amin als Härtungsmittel umfasst, ist unter anderem in der WO 1998/12270 A1 oder der WO 2016/170122 A1 beschrieben.

Weiter beschreibt die WO 2014/095502 A1 eine dämmschichtbildende Zusammensetzung, insbesondere eine Zusammensetzung mit intumeszierenden Eigenschaften, die ein Bindemittel auf Epoxid-Thiol-Basis enthält. Sowohl als weiteres Härtungsmittel, das sogenannte Co-Härtungsmittel, als auch als Katalysator können Aminverbindungen verwendet werden.

Die Erfinder haben nun herausgefunden, dass Thiolverbindungen an sich und diese enthaltenden Zusammensetzungen eine sehr eingeschränkte Lagerstabilität aufweisen, wenn sie zusammen mit Aminen gelagert werden, wie sie häufig als Katalysatoren oder als Härtungsmittel bzw. Co-Härtungsmittel verwendet werden. Bei der Lagerung kann es zu unerwünschten Reaktionen kommen, die zu einer Zersetzung der Thiolverbindungen führen. Dies kann sich unterschiedlich äußern. Häufig wird während der Lagerung ein Anstieg der Viskosität beobachtet, was sich negativ auf die Handhabung und die Anwendung der Zusammensetzungen ausübt. Wird die Thiolverbindung als Härtungsmittel verwendet, kann deren Zersetzung die Aushärtezeiten und/oder die Aushärteeigenschaften (Aushärtung) der Zusammensetzung negativ beeinflussen. So kann sich die vom Hersteller angegebene Verarbeitungszeit verändern oder die Zusammensetzung härtete nicht mehr vollständig aus bzw. durch, was die Eigenschaften der ausgehärteten Zusammensetzung wiederum negativ beeinflusst. Nicht selten führt die Zersetzung der Thiolverbindungen auch zu kleineren, flüchtigen Thiolverbindungen, die einen unangenehmen Geruch aufweisen.

Eine Möglichkeit, diesen Nachteil zu umgehen, besteht darin, die Zusammensetzungen so zu konfektionieren, dass die Thiolverbindungen und die Aminverbindungen getrennt voneinander gelagert werden. Hierdurch wird allerdings die Entwicklung neuer Zusammensetzungen, die eine Thiolverbindung enthalten und die als Zweikomponenten-Systeme konfektioniert werden sollen, eingeschränkt.

Der Erfindung liegt daher die Aufgabe zugrunde, Zusammensetzungen auf der Basis von Epoxid-Verbindungen, die Thiolverbindungen und Aminverbindungen enthalten, bereitzustellen, die eine verbesserte Lagerstabilität aufweisen.

Diese Aufgabe wird durch die Verwendung nach Anspruch 1 und Anspruch 2 gelöst. Bevorzugte Ausführungsformen sind den Unteransprüchen zu entnehmen.

Zum besseren Verständnis der Erfindung werden die folgenden Erläuterungen der hierin verwendeten Terminologie als sinnvoll erachtet. Im Sinne der Erfindung:
- bedeutet *"Thiolverbindung"* eine Verbindung der Struktur RSH, wobei R ≠ H ist, und somit eine organische Verbindung mit einer Thiolgruppe (-SH) als funktionelle Gruppe, die in der Lage ist, mit Epoxiden eine Reaktion einzugehen;
- bedeutet *"Aminverbindung"* eine formell von Ammoniak durch Ersetzen von einem, zwei oder drei Wasserstoffatomen durch Kohlenwasserstoffgruppen abgeleitete Verbindungen mit den Strukturen: RNH₂ (primäre Amine), R₂NH (sekundäre Amine) oder R₃N (tertiäre Amine);
- bedeutet *"estergruppenfrei"* im Zusammenhang mit Thiolverbindungen, dass die Thiolverbindung keine Carbonsäureestergruppe (R¹C(O)OR²) enthält; insbesondere, dass die funktionelle Gruppe (-SH) nicht über einen eine Carbonsäureestereinheit enthaltenden Linker an einen Rest bzw. das Grundgerüst eines Moleküls angebunden ist und dass der Rest bzw. das Grundgerüst ebenfalls keine Carbonsäureestergruppe enthält;
- bedeutet *"multifunktionell",* dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiolverbindungen, dass diese wenigstens zwei Thiolgruppen pro Molekül aufweisen; die Gesamtzahl der jeweiligen funktionellen Gruppen ist die Funktionalität der entsprechenden Verbindung;
- bedeutet *"Gerüst"* des Epoxidharzes oder der Thiol-funktionalisierten Verbindung der jeweils andere Teil des Moleküls, an das die funktionelle Epoxid- oder Thiolgruppe angebunden sein kann;
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;
- ist ein *"Säurebildner"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- ist ein *"Treibmittel"* eine Verbindung, die sich bei erhöhter Temperatur unter Entwicklung inerter, d.h. nicht-brennbarer Gase zersetzt und das durch die Carbonifizierung gebildete Kohlenstoffgerüst und gegebenenfalls das Erweichte Bindemittel zu einem Schaum aufbläht (Intumeszenz); dieser Begriff wird gleichbedeutend mit *"Gasbildner"* verwendet;
- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.
- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.
- Bedeutet *"Epoxidäquivalentmasse"* diejenige Menge an Epoxidharz in [g], die ein Äquivalent [Val] Epoxidfunktionen besitzt und berechnet sich aus der Molmasse M in [g/Mol] dividiert durch die Funktionalität *f* in [Val/Mol]; (EEW [g/Val]).

Überraschend hat sich gezeigt, dass eine verbesserte Lagerstabilität von Zusammensetzungen, die Thiolverbindungen und Aminverbindungen enthalten, erreicht werden kann, wenn estergruppenfreie Thiolverbindungen verwendet werden.

Ein erster Gegenstand der Erfindung ist demnach die Verwendung einer estergruppenfreien Thiolverbindung in einer Aminverbindungen enthaltenden Zusammensetzung zur Verbesserung der Lagerstabilität.

Bei der Zusammensetzung kann es sich um jede Zusammensetzung handeln, die sowohl Thiolverbindungen als auch Aminverbindungen enthält.

Insbesondere handelt es sich bei der Zusammensetzung um eine Zusammensetzung auf Epoxid-Basis, d.h. eine härtende Zusammensetzung mit einem Bindemittel auf Epoxid-Basis.

Ganz besonders handelt es sich bei der Zusammensetzung um eine Brandschutzzusammensetzung, genauer um eine intumeszierende Zusammensetzung, die ein Bindemittel auf Epoxid-Basis, eine Aminverbindung und Intumeszenzadditive, wie sie hierin näher erläutert sind, enthält.

Der Gegenstand der Erfindung umfasst somit auch die Verwendung einer estergruppenfreien Thiolverbindung zur Herstellung einer lagerstabilen Aminverbindungen enthaltenden Zusammensetzung, insbesondere einer Zusammensetzung auf Epoxid-Basis, ganz besonders einer Brandschutzzusammensetzung, genauer um eine intumeszierende Zusammensetzung, die ein Bindemittel auf Epoxid-Basis enthält.

Ein weiterer Gegenstand der Erfindung ist daher eine Zusammensetzung auf Epoxid-Basis erhältlich durch Verwendung von estergruppenfreien Thiolverbindungen, insbesondere eine dämmschichtbildende Zusammensetzung mit verbesserter Lagerstabilität.

Durch die Erfindung ist es möglich, lagerstabile Zusammensetzungen, die sowohl Thiolverbindungen als auch Aminverbindungen enthalten, insbesondere Zusammensetzungen auf der Basis von Epoxidharzen, die gleichzeitig Amin- und Thiolverbindungen enthalten, bereit zu stellen. Dabei ist es unerheblich, ob die Thiolverbindung als Härtungsmittel, Co-Härtungsmittel oder als Additiv eingesetzt wird oder die Aminverbindung.

Insbesondere ist es durch die Erfindung möglich, Zusammensetzungen, insbesondere Brandschutzzusammensetzungen, wie etwa dämmschichtbildende Zusammensetzungen, mit einem Bindemittel auf Epoxid-Thiol-Basis, die Aminverbindungen enthalten, bereitzustellen. Dabei können unter anderem Zweikomponenten-Zusammensetzungen formuliert werden, deren eine Komponente eine Thiol- und eine Aminverbindung enthält, die eine Lagerung über einen längeren Zeitraum erlaubt, ohne dass negative Auswirkungen auf die Viskosität oder das Härtungsverhalten der Zusammensetzung beobachtet werden, verglichen mit Zusammensetzungen, die Thiolverbindungen mit Estergruppen in der Struktur enthalten.

### Thiolverbindungen

Erfindungsgemäß kann jede Verbindung mit mindestens zwei Thiolgruppen (-SH) verwendet werden, die mit den Epoxidharzen reagieren kann, mit der Maßgabe, dass die Thiolverbindung frei von Estergruppen ist.

Jede Thiolgruppe ist dabei entweder direkt oder über einen Linker an ein Gerüst angebunden, mit der Maßgabe, dass der Linker und das Gerüst frei von Estergruppen ist.

Die Thiolverbindung kann über irgendeines einer breiten Vielzahl von Gerüsten verfügen, wobei diese gleich oder unterschiedlich sein können. Das Gerüst kann ein Monomer, ein Oligomer oder ein Polymer sein.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyvinylalkohol, Polydien, hydriertes Polydien, Alkyd, Polyolefin, halogeniertes Polyolefin, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiolverbindungen ist der Linker bevorzugt ausgewählt unter den Strukturen (I) bis (VI):

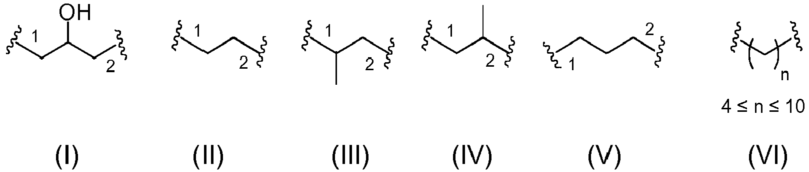

Geeignete estergruppenfreie Thiolverbindungen sind 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiolverbindung verwendet werden. In dieser Hinsicht wird Bezug genommen auf die WO 99/51663 A1.

Bevorzugte estergruppenfreie Thiolverbindungen sind aus der Gruppe bestehend aus 2-Hydroxy-3-mercaptopropylderivaten von Monoalkoholen oder Polyolen, Mercaptan-terminierte Polymere, wie Mercaptan-terminierte Polyether, Tris-(2'-hydroxy-3'-mercaptoprop-1'-yl)-trimethylolpropan, alle Formen von ethoxyliertem Tris-(2'-hydroxy-3'-mercaptoprop-1'-yl)-trimethylolpropan, alle Formen von propoxyliertem Tris-(2'-hydroxy-3'-mercaptoprop-1'-yl)-trimethylolpropan, CeTePox 2200H (CTP), Dithioglycerin, Trithioglycerin, Poly(ethylenglykol)methyletherthiol, 2-[(3-Aminopropyl)amino]ethanthiol, Dithiothreitol, phenylische und benzylische Thiole, wie Benzoldithiol oder Dimercaptostilben, Tetra(ethylenglycol)dithiol, 2-Methylsulfanylpropan-1,3-dithiol, 3-Ethoxypropan-1,2-dithiol, 3-Aminopropan-1,2-dithiol und 3-Anilinopropan-1,2-dithiol ausgewählt.

Besonders geeignete estergruppenfreie Thiolverbindungen sind aus der Gruppe bestehend aus flüssigen, 2-Hydroxy-3-mercapto-1-propylsubstituierten aliphatischen Alkoholen, die gegebenenfalls ethoxyliert oder propoxyliert sind, Tris-(2'-hydroxy-3'-mercaptopropyl)-trimethylolpropan, ethoxyliertem Tris-(2'-hydroxy-3'-mercaptopropyl)-trimethylolpropan, propoxyliertem Tris-(2'-hydroxy-3'-mercaptopropyl)-trimethylolpropan, 1,6-Hexandithiol, Dithioglycerin, Trithioglycerin, Poly(ethylenglykol)methyletherthiol, 2-[(3-Aminopropyl)amino]ethanthiol, Dithiothreitol, phenylischen und benzylischen Thiolen wie Benzoldithiole oder Dimercaptostilben, Hexadecandithiol, Tetra(ethylenglycol)dithiol, 2-Methylsulfanylpropan-1,3-dithiol, 3-Ethoxypropan-1,2-dithiol, 3-Aminopropan-1,2-dithiol, 3-Anilinopropan-1,2-dithiol, und flüssigen thiolterminierten Polysulfid-Polymeren ausgewählt.

Die Thiolverbindung kann auch aus einem oder mehreren Härtern der Handelsbezeichnungen Capcure 3-800 (BASF), Capcure LOF (BASF), GPM 800 (Gabriel Performance Products), GPM 800 LO (Gabriel Performance Products), Polythiol QE 340M (Toray), CeTePox 2200H (CTP), Thioplast G4 (Akzo Nobel) und Thioplast G44 (Akzo Nobel) ausgewählt werden.

Die estergruppenfreie Thiolverbindung kann alleine oder als Gemisch von zwei oder mehreren, unterschiedlichen estergruppenfreien Thiolverbindungen eingesetzt werden.

In einer bevorzugten Ausführungsform der Erfindung werden die eben beschriebenen estergruppenfreien Thiolverbindungen verwendet, um die Lagerstabilität einer Zusammensetzung, die ein Epoxidharz, eine Aminverbindung und zusätzlich eine Thiolverbindung enthält, zu verbessern. Das Epoxidharz fungiert dabei als Bindemittel, die Aminverbindung bzw. die Thiolverbindung als Härtungs- oder Co-Härtungsmittel oder als Katalysator. Gewöhnlich handelt es sich bei der Zusammensetzung um eine zwei- oder mehrkomponentige Zusammensetzung, deren eine Komponente das Epoxidharz und die andere Komponente die Thiolverbindung und die Aminverbindung enthält, damit eine Härtung der Zusammensetzung erst beim Vermischen der Komponenten erfolgt.

In einer weiter bevorzugten Ausführungsform der Erfindung werden die eben beschriebenen estergruppenfreien Thiolverbindungen verwendet, um die Lagerstabilität einer dämmschichtbildenden Zusammensetzung, die ein Epoxidharz, ein dämmschichtbildendes Additiv oder eine Mischung aus dämmschichtbildenden Additiven, eine Aminverbindung und eine Thiolverbindung enthält, zu verbessern. Das Epoxidharz fungiert dabei als Bindemittel, die Aminverbindung bzw. die Thiolverbindung als Härtungs- oder Co-Härtungsmittel oder als Katalysator und das dämmschichtbildendes Additiv oder die Mischung aus dämmschichtbildenden Additiven als Aufschäummittel (chemische Intumeszenz). Gewöhnlich handelt es sich bei der dämmschichtbildenden Zusammensetzung um eine zwei- oder mehrkomponentige Zusammensetzung, deren eine Komponente das Epoxid und die oder eine andere Komponente die Thiolverbindung und die Aminverbindung enthält, damit eine Härtung der Zusammensetzung erst beim Vermischen der Komponenten erfolgt. Eine der Komponenten oder beide Komponenten enthalten hierbei Additive, das dammschichtbildende Additive bzw. die Mischung aus dämmschichtbildenden Additiven, welche im Brandfall zu einer Expansion (Intumeszenz) der sich bildenden Aschekruste führt.

### Epoxidverbindungen

Als Epoxidharz sind in der Epoxidchemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:
a) Reaktionsprodukte von Epichlorhydrin mit Bisphenol A;
b) Reaktionsprodukte von Epichlorhydrin mit Bisphenol S
c) Epoxid-Novolake auf Phenol- oder Cresolbasis;
d) Aromatische Glycidylaminharze;
e) Epoxidharze ohne aromatische Struktureinheiten;
sowie Gemische zweier oder mehrerer derartiger Epoxidharzen in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt sind Reaktionsprodukte von Epichlorhydrin mit Bisphenol A mit einem Epoxidäquivalentmasse (EEW) ≤ 550 g/Val; Reaktionsprodukte von Epichlorhydrin mit Bisphenol F, dem einfachsten Vertreter der Novolake, mit einem EEW ≤ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol A mit einem EEW ≤ 330 g/Val; Reaktionsprodukte von Epichlorhydrin mit Bisphenol F, dem einfachsten Vertreter der Novolake, mit einem EEW ≤ 300 g/Val, beliebige Gemische dieser beiden Reaktionsprodukte, Reaktionsprodukte eines beliebigen Gemisches von Bisphenol A und Bisphenol F mit Epichlorhydrin mit einem EEW ≤ 330 g/Val, 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharzen in beliebigem Verhältnis und in beliebigen Reinheitsgraden.

Ganz besonders bevorzugt sind Reaktionsprodukte von Epichlorhydrin mit Bisphenol A mit einem EEW ≤ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin 0 ≤ n ≤ 0,2;

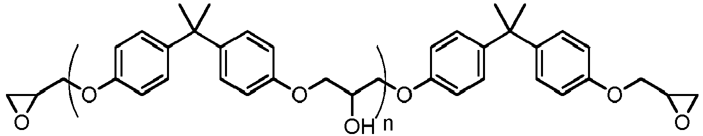

Reaktionsprodukte von Epichlorhydrin mit Bisphenol F, dem einfachsten Vertreter der Novolake, mit einem EEW ≤ 185 g/Val, wie beispielsweise Epilox® F 16-01 oder Epilox® F 17-00 der Leuna-Harze GmbH, dargestellt durch die nachfolgende Formel, worin 0 ≤ n ≤ 0,2; 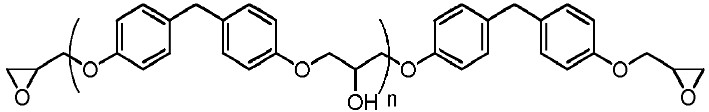 sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder-A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

### Reaktivverdünner

Durch Zugabe mindestens eines Reaktivverdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktivverdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktivverdünner kombiniert werden. Geeignete Beispiele sind Allylglycidylether, Butylglycidylether (BGE), 2-Ethylhexylglycidylether, Alkylglycidylether (C₁₂-C₁₄), Tridecylglycidylether, Phenylglycidylether (PGE), *o*-Kresolglycidylether (CGE), *p*-*tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

In den hierin beschriebenen Zusammensetzungen kann der relative Anteil an Epoxidharzen zu Thiolverbindungen durch das reaktive Äquivalentverhältnis, welches das Verhältnis der Anzahl aller Epoxidgruppen in der Zusammensetzung zu der Anzahl an Thiolgruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1.

### Aminverbindungen

Als zusätzliche Härterkomponente, auch als Co-Härtungsmittel bezeichnet, kann optional ein für Epoxidharze üblicher Aminhärter verwendet werden. Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), m-Xylylendiamin (mXDA), N-Methylbenzylamin (NMB) oder die Ancamide® (Air Products), Diethylaminopropylamin (DEAPA), *N*-Aminoethylpiperazin (N-AEP), Diaminodiphenylsulfon (DDS), 1,8-Diamino-p-menthan (MDA). Ebenso können Polyetheramine wie Jeffamine® D-230 (Huntsman), Jeffamine® D-400 (Huntsman), Jeffamine® T-403 (Huntsman) verwendet werden.

Über ein entsprechend gewähltes Gemisch aus Thiolverbindung und Aminverbindung als Härter für das Epoxidharz können die Beschichtungseigenschaften eingestellt werden.

### Katalysator

Die Zusammensetzung kann ferner einen Katalysator für die Reaktion zwischen dem Epoxidharz und der Thiolverbindung enthalten, wodurch die Zusammensetzung bei niedrigen Temperaturen, etwa Raumtemperatur, hinreichend schnell verarbeitbar und aushärtbar wird.

Bevorzugt wird ein Katalysator für die Härtung, d.h. die Reaktion des Epoxidharzes mit der Thiolverbindung verwendet. Durch die Verwendung eines Katalysators werden Zusammensetzungen erhalten, die schnell, d.h. innerhalb von wenigen Minuten, und vollständig auch bei Raumtemperatur aushärten, was solche Zusammensetzungen sehr attraktiv für die Anwendung vor Ort, etwa auf der Baustelle macht.

Als Katalysatoren können die üblicherweise für die Aushärtung von Epoxidharzen verwendeten Verbindungen, insbesondere solche, die für die Reaktionen zwischen Epoxidharzen und Thiolverbindungen üblicherweise verwendet werden, wie tertiäre Amine, z.B. Triethylendiamin, N,N-dimethylpiperidine, Benzyldimethylamin, *N,N-*Dimethylpropylamin, Triethanaolamin, N,N-dimethyldipropylenetriamine, 1,8-Diazabicyclo[5.4.0]undec-7-en und Bis-*N,N*-Dimethylethanolaminether, Imidazole, z.B. 2-Methylimidazol, 2-Ethyl-4-methylimidazol, 2-phenylimidazole und Phenol-Derivate, z.B. Tris(dimethylaminomethyl)phenol, 2-[(Dimethylamino)methyl]phenol, 2,4-bis[(dimethylamino)methyl]-6-methylphenol Nonylphenol, und dergleichen, die dem Fachmann bekannt sind, verwendet werden.

In einer bevorzugten Ausführungsform können die hierin beschriebenen Zusammensetzungen ferner ein Aminophenol oder einen Ether davon, der mindestens eine tertiäre Aminogruppe gegebenenfalls zusammen mit einer primären und/oder sekundären Aminogruppe aufweist, als Katalysator. Der Katalysator ist bevorzugt unter Verbindungen der allgemeinen Formel (XX) ausgewählt, 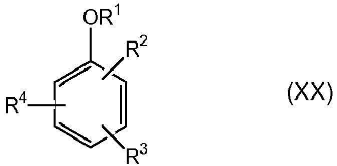 in der R¹ Wasserstoff oder ein linearer oder verzweigter C₁-C₁₅-Alkylrest ist, R² (CH₂)ₙNR⁵R⁶- oder NH(CH₂)ₙNR⁵R⁶- ist, in denen R⁵ und R⁶ unabhängig voneinander ein linearer oder verzweigter C₁-C₁₅-Alkylrest sind und n = 0 oder 1 ist, R³ und R⁴ unabhängig voneinander Wasserstoff, (CH₂)ₙNR⁷R⁸ oder NH(CH₂)ₙNR⁷R⁸ sind, R⁷ und R⁸ unabhängig voneinander Wasserstoff oder ein linearer oder verzweigter C₁-C₁₅-Alkylrest sind und n = 0 oder 1 ist.

R¹ ist bevorzugt Wasserstoff oder ein C₁-C₁₅-Alkylrest, insbesondere ein linearer C₁-C₁₅-Alkylrest, stärker bevorzugt Methyl oder Ethyl und am stärksten bevorzugt Methyl.

Bevorzugt ist das Phenol der Formel (XX) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylreste sind, sind diese bevorzugt ein C₁-C₅-Alkylrest, stärker bevorzugt Methyl oder Ethyl und am stärksten bevorzugt Methyl.

Als Katalysator kann entweder eine Verbindung oder ein Gemisch von mindestens zwei Verbindungen der Formel (XX) eingesetzt werden.

Bevorzugt ist der Katalysator unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Katalysator 2,4,6-Tris(dimethylaminomethyl)phenol.

Ein bevorzugtes Katalysatorgemisch enthält 2,4,6-Tris(dimethlaminomethyl)phenol und Bis(dimethylaminomethyl)phenol. Solche Gemische sind z.B. kommerziell erhältlich als Ancamine® K-54 (AirProducts, Belgien).

### Dämmschichtbildende Additive

Die Zusammensetzung auf Epoxid-Basis kann eine intumeszierende Zusammensetzung sein und mindestens ein dämmschichtbildendes Additiv enthalten. Als dämmschichtbildendes Additiv kann sowohl eine einzelne Verbindung als auch ein Gemisch von mehreren Verbindungen verwendet werden.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt. Die Komponenten des Additivs werden insbesondere so ausgewählt, dass sie einen Synergismus entwickeln können, wobei einige der Verbindungen mehrere Funktionen erfüllen können.

Auf einen Kohlenstofflieferanten kann verzichtet werden, wenn das Bindemittel und/oder die übrigen in der Zusammensetzung enthaltenen Verbindungen aufgrund ihrer chemischen Natur bereits die Funktion eines Kohlenstofflieferanten und damit als Kohlenstoffgerüstbildner haben kann. Dies ist bei Epoxid-basierten Zusammensetzungen etwa der Fall.

Auf ein Treibmittel kann verzichtet werden, wenn das Bindemittel und/ oder die übrigen in der Zusammensetzung enthaltenen Verbindungen, wie etwa das Härtungsmittel, funktionelle Gruppen enthalten, die bei der Zersetzung des ausgehärteten Bindemittels bei Hitzeeinwirkung, zu einer Gasentwicklung und damit zu einem Aufschäumen der erweichenden ausgehärteten Zusammensetzung führen.

Da es sich bei der Zusammensetzung um eine Zusammensetzung auf Epoxid-Basis handelt, die Aminverbindungen enthält, kann auf sowohl auf einen Kohlenstofflieferanten als auch auf ein Treibmittel verzichtet werden.

In einer Ausführungsform der Erfindung, in der die isolierende Schicht durch chemische Intumeszenz gebildet wird, ist ein Säurebildner als dämmschichtbildendes Additiv ausreichen. Dennoch kann die Zusammensetzung sowohl einen zusätzlichen Kohlenstofflieferanten als auch ein zusätzliches Treibmittel enthalten.

Wird zusätzlich ein Kohlenstofflieferant verwendet, kommen als Kohlenstofflieferant die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im Wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Wird ein Treibmittelverwendet, kommen als Treibmittel die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US 3 969 291 B1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkallationsverbindung, die auch als Blähgraphit bekannt sind. Diese können ebenfalls ins Bindemitteleingebunden werden.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben.

### Aschekrustenstabilisatoren

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

### Flammhemmer

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int. 2004, 53, 1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

### Weitere Additive

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

### Konfektionierung

Die lagerstabile Zusammensetzung kann als Zwei- oder mehrkomponenten-System konfektioniert werden.

In einer Ausführungsform der Erfindung ist die erfindungsgemäß hergestellte Zusammensetzung als Zweikomponenten-System konfektioniert, wobei das Epoxidharz und die Mischung aus Thiol- und Aminverbindung reaktionsinhibierend getrennt angeordnet sind. Dementsprechend enthält eine erste Komponente, die Komponente I, das Epoxidharz und eine zweite Komponente, die Komponente II, die Thiol- und die Aminverbindung. Hierdurch wird erreicht, dass die beiden reaktiven Bestandteile des Bindemittels erst unmittelbar vor der Anwendung miteinander gemischt werden und die Härtungsreaktion auslösen. Dies macht das System einfacher in der Handhabung.

Das mindestens eine Epoxidharz ist dabei bevorzugt in einer in einer Menge von 3 bis 95 Gew.-%, besonders bevorzugt in eine Menge von 5 bis 80 Gew.-% in der Komponente I enthalten.

Wird ein Reaktivverdünner verwendet, so ist dieser bevorzugt in einer Menge von 0,25 bis 70 Gew.-%, besonders bevorzugt 0,5 bis 50 Gew.-% in der Komponente I enthalten.

Die Thiolverbindung ist bevorzugt in einer Menge von 1 bis 99 Gew.-%, besonders bevorzugt in einer Menge von 5 bis 95 Gew.-% in der Komponente II enthalten.

Das dämmschichtbildende Additiv bzw. die Mischung aus dämmschichtbildenden Additiven kann dabei als Gesamtmischung oder in Einzelbestandteile aufgeteilt in der ersten Komponente I und/oder einer zweiten Komponente II enthalten sein. Die Aufteilung des dämmschichtbildenden Additivs, bzw. der Mischung aus Additiven erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils C in der Gesamtformulierung so hoch wie möglich eingestellt. Bevorzugt beträgt der Anteil des Bestandteils C in der Gesamtformulierung 35 bis 85 Gew.-% und besonders bevorzugt 40 bis 85 Gew.-%.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit solchen Zusammensetzungen auf Epoxid-Basis, die neben Aminverbindungen auch Thiolverbindungen enthalten, wobei die Thiolverbindungen Estergruppen aufweisen, durch eine verbesserte Lagerstabilität aus.

Die erfindungsgemäß hergestellte zwei- oder mehrkomponentige, lagerstabile Zusammensetzung ist als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäß hergestellte, lagerstabile Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Die folgenden Beispiele dienen der weiteren Erläuterung der Erfindung.

### AUSFÜHRUNGSBEISPIELE

Um den Einfluss der Art der Thiole auf die Lagerstabilität einer Zusammensetzung auf Epoxid-Amin-Basis zu zeigen, wurden zunächst Lagerversuche mit einer einfachen Mischung aus einem Thiol und einem Amin durchgeführt. Hierzu wurde die Viskosität der jeweils frisch hergestellten Mischung, der Mischungen nach vier und nach acht Wochen Lagerung bei +40°C bestimmt. Die Lagertemperatur von +40°C wurde gewählt, um eine Lagerung bzw. Alterung der Mischung über einen längeren Zeitraum bei Raumtemperatur zu simulieren.

Des Weiteren wurden Lagerversuche mit Mischungen aus jeweils einem Thiol, einem Amin, Melamin, Ammoniumpolyphosphat und einem Benetzungsmittel durchgeführt. Hierzu wurde die Viskosität der jeweils frisch hergestellten Mischung, der Mischungen nach vier und nach acht Wochen Lagerung bei +40°C bestimmt.

Ferner wurden Lagerversuche mit Mischungen aus jeweils einem Thiol, Melamin oder Pentaerythritol oder Ammoniumpolyphosphat oder Titandioxid (TiO₂) durchgeführt. Hierzu wurde die Viskosität der jeweils frisch hergestellten Mischung, der Mischungen nach vier und nach acht Wochen Lagerung bei +40°C bestimmt.

**Verwendete Verbindungen:**

| | | |
|---|---|---|
| Thiocure PETMP | Pentaerythritoltetra(3-mercaptopropionat) | Bruno Bock |
| Thiocure TMPMA | Trimethylolpentantetramercaptoacetat | Bruno Bock |
| CeTePox 2200H | | CTP |
| Polythiol QE 340M | flüssiges Harz, das aus einer Polyetherhauptkette besteht, an deren Enden die Thiol-Basis eingeführt wird | Toray |
| DBU | 1,8-Diazabicyclo[5.4.0]undec-7-en | Sigma Aldrich, TCI |
| Jeffcat ZF-10 | *N,N,N*'-trimethyl-*N*'-hydroxyethyl-bisaminoethylether | Huntsman |
| Jeffcat ZF-22 | Bis-(2-dimethylaminoethyl)ether 70% in Dipropylenglykol | Huntsman |
| DABCO 33-LV | 33 Gew.-% Triethylendiamin in Dipropylenglykol | Sigma Aldrich |
| PMDETA | *N,N,N',N",N*"-Pentamethyldiethylentriamin | Sigma Aldrich |
| Ancamine K54 | 2,4,6-Tri(dimethylaminomethyl)phenol | AirProducts, Belg |
| 2E4MIZ | 2-Ethyl-4-methylimidazol 95% | Sigma Aldrich |
| Versamin EH-50 | Tertiary amine accelerator and curing agent | BASF |
| DBN | 1,5-Diazabicyclo[4.3.0]non-5-en | Sigma Aldrich |
| BYK-W 903 | Lösung eines Copolymers mit füllstoffaffinen Gruppen | BYK-Chemie GmbH |
| APP | Ammoniumpolyphosphat Exolit AP 462 | Clariant |
| Melafine | 2,4,6-Triamino-1,3,5-triazin (Melamin) | OCI Nitrogen |
| Charmor PM40 | Monopentaerythritol | Perstorp |
| Epilox F16-01 | Epoxidharz auf Bisphenol F-Basis | LEUNA-Harze GmbH |
| TiO₂ | Kronos Titandioxid 2056 | Kronos International Inc |
| Heloxy modifier HD | 1,6-Hexandioldiglycidylether | Momentive, Hexion |

### Messung der Viskosität

Die Messung der dynamischen Viskosität aller Mischungen erfolgte mit einem Kegel-Platte Messsystem nach DIN 53019. Der Durchmesser des Kegels betrug 20 mm und der Öffnungswinkel war 1°. Die Messtemperatur betrug 23 °C (Beispiele aus Tabelle 1, Tabelle 6 und Beispiele 47 und 48) bzw. 40 °C (Beispiele aus Tabelle 2 und Tabelle 4 ausschließlich Beispiele 47 und 48). Alle abgebildeten Viskositätswerte entsprechen dem Wert bei 215/s.

Es wurden jeweils drei Messpunkte erstellt, wobei in den Tabellen 1, 2, 4 und 6 die entsprechenden Mittelwerte angegeben sind.

Für Beispiele aus Tabelle 1 wurde folgende Methode angewendet: Es wurde bei 23 °C in 16 Stufen zu je 11 Sekunden logarithmisch die Schergeschwindigkeit von 0,010/s auf 500/s gesteigert.

Für Beispiele aus Tabelle 2 und Tabelle 4 (ausschließlich Beispiele 46 und 47) wurde folgende Methode angewendet: Es wurde bei 40 °C in einem ersten Abschnitt in 7 Stufen zu je 11 Sekunden bei 0,100/s, 0,215/s, 0,464/s, 1,000/s, 2,154/s, 4,642/s und 10,00/s geschert und in einem zweiten Abschnitt bei 40 °C in 6 Stufen zu je 8 Sekunden logarithmisch die Schergeschwindigkeit von 21,54/s auf 464,2/s gesteigert.

Für Beispiele aus Tabelle 6 und Beispiele 46, 47 wurde folgende Methode angewendet: Es wurde bei 23 °C in 14 Stufen zu je 11 Sekunden logarithmisch die Schergeschwindigkeit von 0,100/s auf 500/s gesteigert.

### a) Beurteilung der Lagerstabilität von Mischungen aus jeweils einem Thiol und einem Amin anhand der Viskosität und der Aushärtezeit der Mischungen

In den folgenden Tabellen 1 und 2 sind die Viskositäten von frisch hergestellten Thiol-Amin-Mischung und der Thiol-Amin-Mischungen nach einer, vier und nach acht Wochen Lagerung bei +40°C wiedergegeben.

Alle Viskositäten wurden bei einer Scherrate von 215 s⁻¹ und einer Temperatur von +23°C (Tabelle 1) (nach Lagerung bei +40°C auf +23C heruntergekühlt) bzw. +40°C (Tabelle 2) gemessen. Die Menge des Amins bzw. der Aminlösung ist in Gew.-% relativ zu der Menge an Thiol angegeben.

**Tabelle 1: Ergebnisse der Messung der Viskosität der Thiol-Amin-Mischungen, gemessen bei +23°C**

| **Beispiel** | **Thiol** | **Amin (Gew.-%)** | **Viskosität der frisch hergestellten Formulierung** | **Viskosität nach 1 Woche Lagerung** | **Viskosität nach 4 Wochen Lagerung** | **Viskosität nach 8 Wochen Lagerung** |
|---|---|---|---|---|---|---|
| **1** | Thiocure PETMP | DBU (1,1%) | 0,49 | 0,67 | 0,95 | 1,71 |
| **2** | Thiocure PETMP | Jeffcat ZF-10 (1,0%) | 0,38 | - | 0,42 | 0,62 |
| **3** | Thiocure PETMP | Jeffcat ZF-10 (6,5%) | 0,28 | - | 0,37 | 0,53 |
| **4** | Thiocure PETMP | DABCO 33-LV (6,5%) | 0,33 | 0,37 | 0,45 | 0,56 |
| **5** | Thiocure PETMP | PMDETA (6,5%) | 0,26 | 0,36 | - | 2,32 |
| **6** | TMPMA | Ancamine K54 (4,5%) | 0,13 | 0,38 | 2,37 | - |
| **7** | TMPMA | DBU (1,2%) | 0,11 | 0,51 | 2,31 | - |
| **8** | TMPMA | Jeffcat ZF-10 (2,3%) | 0,10 | 0,16 | 0,27 | - |
| **9** | TMPMA | Jeffcat ZF-22 (3,4%) | 0,09 | 0,22 | 1,2 | - |
| **10** | TMPMA | PMDETA (6,6%) | 0,11 | - | - | - |
| **11** | TMPMA | DABCO 33-LV (3,4%)* | 0,09 | 0,16 | 0,59 | - |
| **12** | TMPMA | 2E4MIZ (10,4%) | 0,21 | 2,88 | - | - |
| **13** | CeTePox 2200H | Ancamine K54 (3,1%) | 14,97 | 14,77 | 12,99 | 14,56 |
| **14** | CeTePox 2200H | Versamin EH-50 (2,3%) | 14,5 | 13,9 | 14,21 | 16,59 |
| **15** | CeTePox 2200H | Jeffcat ZF22 (2,3%) | 14,5 | 10,11 | 10,6 | 11,49 |
| **16** | CeTePox 2200H | Jeffcat ZF10 (1,6%) | 11,91 | 10,71 | 9,95 | 11,78 |
| **17** | CeTePox 2200H | DBU (1,6%) | 19,64 | 18,79 | 23,28 | 41,54 |
| **18** | CeTePox 2200H | DABCO (2,3%) | 13,01 | 11,74 | 9,93 | 12,05 |
| **19** | Polythiol QE 340M | Ancamin K54 (4,5%) | 13,74 | 13,85 | 14,54 | 15,43 |
| **20** | Polythiol QE 340M | DBN (1,6%) | 16,92 | 19,35 | 25,10 | 41,97 |
| **21** | Polythiol QE 340M | Jeffcat ZF-10 (1,6%) | 12,25 | 11,82 | 13,35 | 13,64 |
| **22** | Polythiol QE 340M | Jeffcat ZF-22 (2,3%) | 10,94 | 11,42 | 12,07 | 13,26 |
| **23** | Polythiol QE 340M | DBU (1,6%) | 16,33 | 17,79 | 24,11 | 31,40 |
| **24** | Polythiol QE 340M | DABCO 33-LV (2,3%) * | 11,59 | 11,74 | 12,67 | 13,68 |
| **25** | Polythiol QE 340M | Versamin EH-50 (2,3%) | 14,01 | 14,43 | 15,71 | 17,31 |
| **26** | Polythiol QE 340M | DBN (0,79%) | 15,50 | 17,71 | 19,13 | 21,75 |
| **27** | Polythiol QE 340M | DBU (0,79%) | 14,84 | 15,89 | 16,60 | 17,71 |

| | | | | | | |
|---|---|---|---|---|---|---|
| * bezogen auf die Lösung (= DABCO 33-LV) | | | | | | |

**Tabelle 2: Viskositäten der Thiol-Amin-Mischungen, gemessen bei +40°C**

| **Beispiel** | **Thiol** | **Amin (Gew.-%)** | **Viskosität der frisch hergestellten Formulierung** | **Viskosität nach 1 Woche Lagerung** | **Viskosität nach 4 Wochen Lagerung** | **Viskosität nach 8 Wochen Lagerung** |
|---|---|---|---|---|---|---|
| **28** | Thiocure PETMP | DBU (1,1%) | 0,17 | 0,21 | 0,28 | 0,42 |
| **29** | Thiocure PETMP | Jeffcat ZF-10 (2,3%) | 0,12 | 0,13 | 0,15 | 0,15 |
| **30** | Thiocure PETMP | PMDETA (6,5%) | 0,10 | 0,12 | 0,22 | 0,50 |
| **31** | TMPMA | DBU (1,2%) | 0,05 | 0,13 | 0,50 | 1,00 |
| **32** | TMPMA | Jeffcat ZF-10 (2,3%) | 0,04 | 0,06 | 0,14 | 0,27 |
| **33** | TMPMA | DABCO 33-LV (3,4%)* | 0,04 | 0,06 | 0,11 | 0,15 |
| | | | | | | |
| **34** | CeTePox 2200H | Ancamine K54 (3,1%) | 2,0 | 2,0 | 2,0 | 2,0 |
| **35** | CeTePox 2200H | Jeffcat ZF-10 (1,6%) | 1,78 | 1,73 | 1,85 | 1,67 |
| **36** | CeTePox 2200H | DABCO 33-LV (2,3%) | 1,84 | 1,85 | 1,89 | 1,79 |
| **37** | Polythiol QE 340M | Ancamin K54 (4,5%) | 2,80 | 2,77 | 3,0 | 3,0 |
| **38** | Polythiol QE 340M | Jeffcat ZF-10 (1,6%) | 2,55 | 2,45 | 2,80 | 2,37 |

| | | | | | | |
|---|---|---|---|---|---|---|
| * bezogen auf die Lösung (= DABCO 33-LV) | | | | | | |

Um zu ermitteln, wie sich die Lagerstabilität der Mischungen der Beispiele aus Tabelle 1 auf die Aushärtung auswirkt, wurden die Mischungen, nachdem diese auf Raumtemperatur (+23°C) heruntergekühlt wurden, bei Raumtemperatur (+23°C) durch Mischen mit frischem Epoxidharz (Epilox F 16-01) gehärtet. Die Menge an Epoxidharz wurde so berechnet, dass eine stöchiometrische Reaktion stattfinden konnte (funktionelles Verhältnis Epoxid:Amin = 1:1).

**Tabelle 3: Aushärtezeiten in Minuten [min] der Mischungen aus Tabelle 1**

| **Beispiel** | **Thiol** | **Amin** | **Aushärtezeit einer frisch hergestellten Mischung** | **Aushärtezeit nach 1 Woche Lagerung** | **Aushärtezeit nach 4 Wochen Lagerung** | **Aushärtezeit nach 8 Wochen Lagerung** |
|---|---|---|---|---|---|---|
| **1** | Thiocure PETMP | DBU (1,1%) | 1,7 | 3 | 2,5 | 4 |
| **2** | Thiocure PETMP | Jeffcat ZF-10 (1,0%) | 17 | - | 56 | >1440 |
| **3** | Thiocure PETMP | Jeffcat ZF-10 (6,5%) | 9 | - | 17 | 44 |
| **4** | Thiocure PETMP | DABCO 33-LV (6,5%)* | 4 | 5 | 6 | 10 |
| **5** | Thiocure PETMP | PMDETA (6,5%) | 6 | 7 | 14 | 38 |
| **6** | TMPMA | Ancamine K54 (4,5%) | 10 | 14 | 50 | - |
| **7** | TMPMA | DBU (1,2%) | 4 | 5 | 19 | - |
| **8** | TMPMA | Jeffcat ZF-10 (2,3%) | 16 | 45 | > 900 | - |
| **9** | TMPMA | Jeffcat ZF-22 (3,4%) | 10 | 15 | 51 | - |
| **10** | TMPMA | PMDETA (6,6%) | 4 | - | - | - |
| **11** | TMPMA | DABCO 33 LV (3,4%) | 8 | 16 | > 900 | - |
| **12** | TMPMA | 2E4MIZ (10,4%) | 4 | > 900 | - | - |
| **13** | CeTePox 2200H | Ancamine K54 (3,1%) | 9 | 9 | 9 | 12 |
| **14** | CeTePox 2200H | Versamin EH-50 (2,3%) | 9 | 9 | 10 | 10 |
| **15** | CeTePox 2200H | Jeffcat ZF22 (2,3%) | 6 | 8 | 9 | 10 |
| **16** | CeTePox 2200H | Jeffcat ZF10 (1,6%) | 8 | 10,5 | 10 | 10 |
| **17** | CeTePox 2200H | DBU (1,6%) | 1 | 1 | 1 | 1 |
| **18** | CeTePox 2200H | DABCO 33 LV (2,3%)* | 5 | 5 | 5 | 5 |
| **19** | Polythiol QE 340M | Ancamin K54 (4,5%) | 15 | 13 | 13 | 13 |
| **20** | Polythiol QE 340M | DBN (1,6%) | 1 | 2 | 2 | 2 |
| **21** | Polythiol QE 340M | Jeffcat ZF-10 (1,6%) | 32 | 25 | 32 | 32 |
| **22** | Polythiol QE 340M | Jeffcat ZF-22 (2,3%) | 24 | 14 | 16 | 17 |
| **23** | Polythiol QE 340M | DBU (1,6%) | 2 | 3 | 2 | 3 |
| **24** | Polythiol QE 340M | DABCO 33-LV (2,3%)* | 5 | 8 | 9 | 8 |
| **25** | Polythiol QE 340M | Versamin (2,3%) | 18 | 20 | 23 | 22 |
| **26** | Polythiol QE 340M | DBN (0,79%) | 2 | 12 | 46 | 71 |
| **27** | Polythiol QE 340M | DBU (0,79%) | 4 | 44 | - | 137 |

| | | | | | | |
|---|---|---|---|---|---|---|
| * bezogen auf die Lösung (= DABCO 33-LV) | | | | | | |

### b) Beurteilung der Lagerstabilität von Mischungen aus jeweils einem Estergruppen-freien Thiol und anorganischen Füllstoffen anhand der Viskosität und der Aushärtezeit der Mischungen

In der folgenden Tabelle 4 sind die Viskositäten von frisch hergestellten Thiol-Amin-Füllstoff-Mischungen und der Thiol-Amin-Füllstoff-Mischungen nach einer, vier und acht Wochen Lagerung bei +40°C wiedergegeben. Die Mischung in Beispiel 46 entspricht der Mischung in Beispiel 47, wobei diese bei +23°C anstatt bei +40°C gelagert wurde.

Alle Viskositäten wurden bei einer Scherrate von 215 s⁻¹ und einer Temperatur von +40°C gemessen. Die Menge des Amins ist in Gew.-% relativ zu der Menge an Thiol angegeben.

**Tabelle 4: Viskositäten [Pa·s] der Thiol-Amin-Füllstoff-Mischungen, gemessen bei +40°C**

| **Beispiel (Lager-temperatur)** | **Thiol** | **Amin** | **Füllstoff(e)** | **Viskosität der frisch hergestellten Formulierung** | **Viskosität nach 1 Woche Lagerung** | **Viskosität nach 4 Wochen Lagerung** | **Viskosität nach 8 Wochen Lagerung** |
|---|---|---|---|---|---|---|---|
| **39 (40 °C)** | Thiocure PETMP | DBU (0,5%) | Byk W 903 (1%) APP (15%) Melafine (15%) TiO₂ (15%) Charmor PM 40 (15%) | 4,33 | 5,48 | 13,84 | 10,01 |
| **40 (40 °C)** | Thiocure PETMP | Pmdeta (2,5%) | Byk W 903 (1%) APP (15%) Melafine (15%) TiO2 (15%) Charmor PM 40 (15%) | 2,17 | 3,14 | 5,98 | 8,84 |
| **41 (40 °C)** | Thiocure TMPMA | DBU (0,5%) | Byk W 903 (1%) APP (15%) Melafine (15%) TiO₂ (15%) Charmor PM 40 (15%) | 2,01 | 4,39 | 9,68 | 10,66 |
| **42 (40 °C)** | Thiocure TMPMA | DABCO 33-LV (1,3%) | Byk W 903 (1%) APP (15%) Melafine (15%) TiO₂ (15%) Charmor PM 40 (15%) | 1,43 | 10,21 | 3,00 | 2,79 |
| **43 (40 °C)** | CeTePox 2200H | Ancamine K54 (1%) | Byk W 903 (1%) APP (14%) Melafine (14%) TiO₂ (14%) Charmor PM 40 (14%) | 15,40 | 17,09 | 48,25 | 11,66 |
| **44 (40 °C)** | CeTePox 2200H | DABCO 33-LV (1%) | Byk W 903 (0,9%) APP (13%) Melafine (13%) TiO₂ (13%) Charmor PM 40 (13%) | 9,77 | 22,74 | 42,25 | 16,32 |
| **45 (40 °C)** | Polythiol QE 340M | Ancamine K54 (2,2%) | Byk W 903 (0,9%) APP (13%) Melafine (13%) TiO₂ (13%) Charmor PM 40 (13%) | 13,92 | 15,56 | 16,38 | 10,24 |
| **46 (23 °C)** | CeTePox 2200H | DABCO 33-LV (0,2%)* | Byk W 903 (1%) APP (30%) Melafine (30%) | 23,84 | 22,31 | 22,57 | 20,77 |
| **47 (40 °C)** | CeTePox 2200H | DABCO 33-LV (0,2%) | Byk W 903 (1%) APP (30%) Melafine (30%) | 23,84 | 22,48 | 22,84 | 22,19 |

| | | | | | | | |
|---|---|---|---|---|---|---|---|
| * Bezogen auf die Lösung (= DABCO 33-LV) | | | | | | | |

Um zu ermitteln, wie sich die Lagerstabilität der Thiol-Amin-Füllstoff-Mischungen aus den Beispielen 39 bis 47 auf die Aushärtung auswirkt, wurden die Mischungen aus den Beispielen 39 bis 45 nach dem diese auf Raumtemperatur (+23°C) heruntergekühlt wurden, bei Raumtemperatur (+23°C) mit frischem Epoxidharz (Epilox F 16-01) gemischt. Die Menge an Epoxidharz wurde so berechnet, dass eine stöchiometrische Reaktion stattfinden konnte (funktionelles Verhältnis Epoxid:Amin = 1:1).

Die Thiol-Amin-Füllstoff-Mischung in den Beispielen 46 und 47 wurde nicht mit einem frisch hergestellten Epoxidharz sondern mit einer gealterten Epoxid-Zusammensetzung gehärtet. Hierzu wurde die Thiol-Amin-Mischung der Beispiele 46 und 47 mit 26 Gew.-% Epilox F16-01, 20 Gew.-% Charmor PM 40, 20 Gew.-% Exolit AP 462, 20 Gew.-% Kronos 2056, 13 Gew.-% Heloxy modifier HD und 1 Gew.-% BYK W-903 gemischt.

Die Aushärtezeiten wurden jeweils bei 23 °C bestimmt.

**Tabelle 5: Aushärtezeiten in Minuten [min] der Mischungen aus den Beispielen 39 bis 47**

| **Beispiel** | **Thiol** | **Amin** | **Füllstoff(e)** | **Aushärtezeit einer frisch hergestellten Mischung** | **Aushärtezeit nach 1 Woche Lagerung** | **Aushärtezeit nach 4 Wochen Lagerung** | **Aushärtezeit nach 8 Wochen Lagerung** |
|---|---|---|---|---|---|---|---|
| **39 (40 °C)** | Thiocure TMPMA | DBU (0,5%) | Byk W 903 (1%) APP (15%) Melafine (15%) TiO₂ (15%) Charmor PM 40 (15%) | 2,5 | 4,5 | 6 | 7 |
| **40 (40 °C)** | Thiocure PETMP | PMDETA (2,5%) | Byk W 903 (1%) APP (15%) Melafine (15%) TiO₂ (15%) Charmor PM 40 (15%) | 5 | 12,5 | 21 | 39 |
| **41 (40 °C)** | Thiocure TMPMA | DBU (0,5%) | Byk W 903 (1%) APP (15%) Melafine (15%) TiO₂ (15%) Charmor PM 40 (15%) | 3 | 10 | 1440 | >4320 |
| **42 (40 °C)** | Thiocure TMPMA | DABCO 33-LV (1,3%)* | Byk W 903 (1%) APP (15%) Melafine (15%) TiO₂ (15%) Charmor PM 40 (15%) | 7,5 | 55 | >4320 | >4320 |
| **43 (40 °C)** | CeTePox 2200H | Ancamine K54 (1%) | Byk W 903 (1%) APP (14%) Melafine (14%) TiO₂ (14%) Charmor PM 40 (14%) | 11 | 10 | 12 | 12,5 |
| **44 (40 °C)** | CeTePox 2200H | DABCO 33-LV (1%) | Byk W 903 (0,9%) APP (13%) Melafine (13%) TiO₂ (13%) Charmor PM 40 (13%) | 4 | 6 | 8 | 8 |
| **45 (40 °C)** | Polythiol QE 340M | Ancamine K54 (2,2%) | Byk W 903 (0,9%) APP (13%) Melafine (13%) TiO₂ (13%) Charmor PM 40 (13%) | 12 | 14 | 20 | 18 |
| **46 (23 °C)** | CeTePox 2200H | DABCO 33-LV (0,2%) | Byk W 903 (1%) APP (30%) Melafine (30%) | 140 | 167 | 126 | 144 |
| **47 (40 °C)** | CeTePox 2200H | DABCO 33-LV (0,2%) | Byk W 903 (1%) APP (30%) Melafine (30%) | 128 | 156 | 127 | 154 |

| | | | | | | | |
|---|---|---|---|---|---|---|---|
| * Bezogen auf die Lösung (= DABCO 33-LV) | | | | | | | |

### c) Beurteilung der Lagerstabilität von Mischungen aus jeweils einem Esterquppen-freien Thiol und einzelnen anorganischen Füllstoffen anhand der Viskosität der Mischungen

In der folgenden Tabelle 6 sind die Viskositäten der frisch hergestellten Thiol-Füllstoff-Mischungen und der Thiol-Füllstoff-Mischungen nach einer, vier und acht Wochen Lagerung bei +40°C wiedergegeben, um zu verdeutlichen, dass die verminderte Lagerstabilität auf die Wechselwirkung von Thiol mit Amin zurückzuführen ist und nicht von einer Wechselwirkung von Thiol mit Füllstoff.

Alle Viskositäten wurden bei einer Scherrate von 215 s⁻¹ und einer Temperatur von +23°C gemessen.

**Tabelle 6: Viskositäten der Thiol-Füllstoff-Mischungen, gemessen bei +23°C**

| **Beispiel** | **Thiol** | **Füllstoff** | **Viskosität der frisch hergestellten Formulierung** | **Viskosität nach 1 Woche Lagerung** | **Viskosität nach 4 Wochen Lagerung** | **Viskosität nach 8 Wochen Lagerung** |
|---|---|---|---|---|---|---|
| **48** | CeTePox 2200H | Melafine (12,5%) | 12,77 | 13,33 | 13,27 | 13,04 |
| **49** | | TiO₂ (12,5%) | 9,60 | 10,09 | 10,95 | 10,04 |
| **50** | | APP (25%) | 18,31 | 16,22 | 15,23 | 13,07 |
| **51** | | Charmor (12,5%) | 13,71 | 12,87 | 13,51 | 14,02 |

## Patentansprüche

1. Verwendung einer estergruppenfreien Thiolverbindung in einer Aminverbindungen enthaltenden Zusammensetzung zur Verbesserung der Lagerstabilität.

2. Verwendung nach Anspruch 1, wobei die Thiolverbindung mindestens zwei Thiolgruppen aufweist.

3. Verwendung nach Anspruch 1 oder 2, wobei die Zusammensetzung eine Zusammensetzung auf Epoxid-Basis ist.

4. Verwendung nach einem der vorhergehenden Ansprüche, wobei die Thiolgruppen der Thiolverbindung an ein Monomer, ein Oligomer oder ein Polymer als Gerüst gebunden sind.

5. Verwendung nach Anspruch 4, wobei die Thiolverbindung aus der Gruppe bestehend aus flüssigen, 2-Hydroxy-3-mercapto-1-propylsubstituierten aliphatischen Alkoholen, die gegebenenfalls ethoxyliert oder propoxyliert sind, Tris-(2'-hydroxy-3'-mercaptopropyl)-trimethylolpropan, ethoxyliertem Tris-(2'-hydroxy-3'-mercaptopropyl)-trimethylolpropan, propoxyliertem Tris-(2'-hydroxy-3'-mercaptopropyl)-trimethylolpropan, 1,6-Hexandithiol, Dithioglycerin, Trithioglycerin, Poly(ethylenglykol)methyletherthiol, 2-[(3-Aminopropyl)amino]ethanthiol, 3-Aminopropan-1-thiol, Dithiothreitol, phenylische und benzylische Thiole wie Benzoldithiole oder Dimercaptostilben, Hexadecandithiol, Tetra(ethylenglycol)dithiol, 2-Methylsulfanylpropan-1,3-dithiol, 3-Ethoxypropan-1,2-dithiol, 3-Aminopropan-1,2-dithiol, 3-Anilinopropan-1,2-dithiol, und flüssigen thiolterminierten Polysulfid-Polymeren ausgewählt ist.

6. Verwendung nach einem der vorhergehenden Ansprüche, wobei die Zusammensetzung ein Epoxidharz enthält, das mindestens zwei Epoxidgruppen aufweist.

7. Verwendung nach Anspruch 6, wobei das Epoxidharz durch die Reaktion von Polyhydroxyverbindungen mit Epihalogenhydrinen oder deren Vorläufern erhältlich ist und eine Epoxidäquivalentmasse (EEW) ≤ 550 g/Val aufweist.

8. Verwendung nach Anspruch 7, wobei die Polyhydroxyverbindung unter mehrwertigen Phenolen ausgewählt ist.

9. Verwendung nach Anspruch 8, wobei die aromatische Polyhydroxyverbindung Bisphenol A oder Bisphenol F oder ein Gemisch davon ist.

10. Verwendung nach einem der Ansprüche 6 bis 9, wobei die Zusammensetzung ferner einen Katalysator für die Reaktion des Epoxidharzes mit der Thiolverbindung enthält.

11. Verwendung nach einem der vorhergehenden Ansprüche, wobei die Zusammensetzung auf Epoxid-Basis eine intumeszierende Zusammensetzung ist.

12. Verwendung nach einem der vorhergehenden Ansprüche, wobei die Zusammensetzung mindestens ein dämmschichtbildendes Additiv enthält.

13. Verwendung nach Anspruch 12, wobei das dämmschichtbildende Additiv eine Verbindung ist, die aus der Gruppe bestehend aus einem Kohlenstofflieferant, einem Säurebildner und einem Treibmittel und einer thermisch expandierbaren Verbindung oder einer Kombination aus zwei oder mehreren daraus ausgewählt ist.

14. Verwendung nach Anspruch 13, wobei Zusammensetzung ferner mindestens einen Aschekrustenstabilisator enthält.

15. Verwendung nach einem der vorhergehenden Ansprüche, wobei die Zusammensetzung ferner organische und/oder anorganische Zuschlagstoffe und/oder weitere Additive enthält.
